# EUROPÄISCHE PATENTSCHRIFT

(11) **EP 0 967 183 B1**
(45) Veröffentlichungstag und Bekanntmachung des Hinweises auf die Patenterteilung: **07.04.2004**
(21) Anmeldenummer: 99110700.4
(22) Anmeldetag: 02.06.1999
(51) Int. Cl.: C03C 19/00, B24C 1/04

(54) **Verfahren für die Bearbeitung eines Quarzglas-Bauteils**
Method of machining a quartz glass component
Procédé de traitement d'un élément en verre de quartz

(30) Priorität: 25.06.1998 US 104435
(43) Veröffentlichungstag der Anmeldung: 29.12.1999
(73) Patentinhaber: Heraeus Quarzglas GmbH & Co. KG, 63450 Hanau (DE); Heraeus Amersil Inc., Duluth, GA 30136-5821 (US)
(72) Erfinder: Rosenblum, Karl, Dunwoody, GA 30338 (US); Breidenbach, Poul-Eric, 63486 Bruchköbel (DE); Leber, Helmut Dr., 63454 Hanau (DE); Weber, Jürgen, 63801 Kleinostheim (DE)
(74) Vertreter: Staudt, Armin Walter

(56) Entgegenhaltungen:
- EP-A- 0 385 484
- EP-A- 0 704 891
- WO-A-99/26764

## Beschreibung

Die Erfindung betrifft ein Verfahren für die Bearbeitung eines Glas-Bauteils durch sukzessives Abtragen von Oberflächenschichten des Bauteils mittels eines Abrasivmittel enthaltenden Flüssigkeitsstrahls, der unter hohem Arbeitsdruck aus einer Düse austretend auf die Oberfläche des Bauteils auftrifft, wobei die Düse mit vorgegebener Vorschubgeschwindigkeit relativ zur Bauteiloberfläche und senkrecht zur Richtung des Flüssigkeitsstrahls bewegt wird.

Verfahren zum Schneiden von Glasbauteilen mittels Hochdruckwasserstrahl sind allgemein bekannt. Das Wirkungsprinzip beruht darauf, daß innerhalb eines Wasserbehälters von einer Hochdruckpumpe ein hoher Arbeitsdruck im Bereich von 300 MPa bis 400 MPa erzeugt und in Bewegungsenergie umgesetzt wird, indem das Wasser durch eine auf das zu bearbeitende Bauteil gerichtete Düse mit hoher Geschwindigkeit ausströmt. Durch Zusatz von Abrasivstoffen zum Wasser wird die Schneid- und Abtragwirkung des Wasserstrahls eingestellt. Als Abrasivmittel werden beispielsweise Granat- oder Hartmetallteilchen eingesetzt. Die Abrasivmittel können beispielsweise dem Wasserstrahl zugeführt oder bereits vorher dem Wasser zugemischt werden. Der Wasserstrahl wird dabei entlang einer vorgegebenen Schnittlinie über die Oberfläche des zu bearbeitenden Werkstückes geführt.

Das bekannte Verfahren zum Schneiden von Glasbauteilen ist für die Bearbeitung von Bauteilen aus Quarzglas nicht geeignet. Es hat sich gezeigt, daß das Verfahren insbesondere beim großflächigen Abtragen von Materlalschichten bei Quarzglasbauteilen zu Rissen und Abplatzungen führt. Die Bearbeitung von Quarzglasbauteilen durch großflächigen Abtrag erfolgt bisher durch Schleifen und Polieren. Wegen der großen Härte von Quarzglas sind derartige Schleif- und Poliervorgänge jedoch zeit- und damit kostenaufwendig.

Der vorliegenden Erfindung liegt die Aufgabe zugrunde, ein Verfahren für die Bearbeitung von Quarzglasbauteilen durch großflächigen Abtrag anzugeben, das im Vergleich zu den bekannten Schleif- und Polierverfahren kostengünstig ist.

Diese Aufgabe wird von dem Verfahren gemäß Anspruch 1 dadurch gelöst, daß der Arbeitsdruck auf einen Wert von maximal 150 MPa eingestellt wird. Dieser Arbeitsdruck ist niedrig im Vergleich zu den bei den bekannten Verfahren zum Schneiden von Glasbauteilen angelegten Drücken. Es hat sich gezeigt, daß sich dadurch Abplatzungen und Risse im Quarzglas verhindern lassen, so daß das erfindungsgemäße Verfahren erstmals ein - im folgenden als "Fräsen" bezeichnetes - großflächiges Abtragen von Materialschichten von Quarzglasbauteilen mittels Hochdruck-Flüssigkeitsstrahl erlaubt. Das Fräsen von Quarzglas reduziert die erforderlichen Bearbeitungszeiten gegenüber den traditionellen Schleifverfahren deutlich; die Zeitersparnis liegt bei 1/2 bis 2/3 der üblichen Schleifzeiten. Bei der Bearbeitung eines Quarzglasbauteils durch Fräsen erfolgt der Materialabtrag dadurch, daß der Flüssigkeitsstrahl in aneinandergrenzenden Schnittlinien so geführt wird, daß er einen Teil der Bauteiloberfläche flächig überstreicht, zum Beispiel in Form eines vorgegebenen Rasters, ohne daß ein Teil des Bauteils abgetrennt wird. Der Durchmesser des Flüssigkeitsstrahls beim Auftreffen auf die zu bearbeitende Oberfläche bestimmt die Breite einer Schnittlinie bei einmaligem Überstreichen. Um einen großflächigen Abtrag zu erreichen, der breiter sein soll als der Durchmesser des Flüssigkeitsstrahls, sind mehrere, aneinandergrenzende Schnittlinien auszuführen. Die Möglichkeiten für die Ausführung der Schnittlinien sind vielfältig und richten sich nach der Form des flächigen Abtrages. Bei einem kreisförmigen Abtrag kann die Schnittlinie beispielsweie in Form einer flächigen Spirale ausgeführt werden, deren Windungen aneinanderliegen, oder in Form koaxialer, aneinanderliegender Kreisringe. Im Falle eines Abtrages in Form einer Rechteckfläche verlaufen die Schnittlinien im einfachsten Fall parallel zueinander, wobei sie beispielsweise durch Hin- und Herbewegung des Flüssigkeiststrahls über der zu bearbeitenden Oberfläche erzeugt werden. Für den Fall, daß die gewünschte Tiefe des Abtrages durch ein einmaliges Überstreichen der Oberfläche mit dem Hochdruck-Flüssigkeitsstrahl nicht erreicht werden kann, muß der Vorgang entsprechend oft wiederholt werden.

Der Flüssigkeitsstrahl ist im einfachsten Fall ein Hochdruck-Wasserstrahl. Es kann aber auch jede andere geeignete Flüssigkeit eingesetzt werden, wie Öle, Alkohole oder auch Laugen oder Säuren, mit der Maßgabe, daß die für die Bearbeitung eingesetzte Vorrichtung für derartige Flüssigkeiten ausgelegt ist.

Die Gefahr der Bildung von Rissen und von Abplatzungen wird weiter verringert, indem der Arbeitsdruck auf einen Wert von maximal 120 MPa eingestellt wird.

Besonders bewährt hat sich eine Verfahrensweise, bei der das Abrasivmittel dem Flüssigkeitsstrahl vor dem Auftreffen auf die Bauteil-Oberfläche zugeführt wird, mit der Maßgabe, daß die Zuführrate von Abrasivmittel zum Flüssigkeitsstrahl maximal 400 g/min beträgt. Es hat sich gezeigt, daß bei dieser Verfahrensweise, bei der zunächst ein Flüssigkeitsstrahl erzeugt und diesem erst anschließend das Abrasivmittel zugeführt wird, das Quarzglas-Bauteil besonders schonend bearbeitet werden kann. Die Geschwindigkeit des Abtrages steigt zwar mit der Menge des dem Flüssigkeitsstrahl zugeführten Abrasivmittels, allerdings werden bei einer Zuführrate oberhalb von 400 g/min zunehmend Schädigungen des Quarzglas-Bauteils beobachtet. Als besonders geeignet hat sich daher eine Zuführrate des Abrasivmittels zum Flüssigkeitsstrahl von maximal 100 g/min erwiesen.

Es hat sich bewährt, die Vorschubgeschwindigkeit auf einen Wert im Bereich von 500 mm/min bis 15000 mm/min einzustellen. Diese - vergleichsweise hohe - Vorschubgeschwindigkeit führt zu einer geringen Oberflächenschädigung und trägt zur Zeitersparnis bei. Die Höhe der Vorschubgeschwindigkeit richtet sich teilweise nach der Höhe des gewünschten Gesamt-Abtrages. Der genannte Bereich für die Vorschubgeschwindigkeit hat sich für einen Gesamt-Abtrag von mindestens 20 mm als günstig erwiesen.

Vorteilhafterweise wird der Abstand der Düse von der Bauteil-Oberfläche auf einen Wert im Bereich von 2 mm bis 50 mm eingestellt. Dadurch wird eine hohe Abtragsrate bei gleichzeitig geringen Oberflächenschädigungen erzielt.

Bei einer ersten bevorzugten Verfahrensvariante, die zur Erzeugung scharfer Kanten im Bereich der Abtragung geeignet ist, wird der Abstand der Düse von der Bauteil-Oberfläche auf einen Wert im Bereich von 2 mm und 5 mm eingestellt. Bei einer zweiten Verfahrensvariante wird der Abstand der Düse von der Bauteil-Oberfläche auf einen Wert von mindestens 5 mm eingestellt. Die letztgenannte Verfahrensvariante ist für die Erzeugung diffuser Kanten im Bereich der Abtragung besonders geeignet.

Nachfolgend wird das erfindungsgemäße Verfahren anhand von Ausführungsbeispielen und einer Patentzeichnung näher erläutert. In der Zeichnung zeigen im einzelnen in schematischer Darstellung
- **Figur 1**: einen Teil einer Hochdruck- Wasserstrahlbearbeitungsvorrichtung,
- **Figur 2**: ein durch Fräsen bearbeitetes, ringscheibenförmiges Werkstück aus Quarzglas in einer Draufsicht,
- **Figur 3**: ein durch Fräsen bearbeitetes, scheibenförmiges Werkstück aus Quarzglas in einer Seitenansicht und
- **Figur 4**: ein durch Fräsen bearbeitetes, plattenförmiges Werkstück aus Quarzglas in einer Seitenansicht.

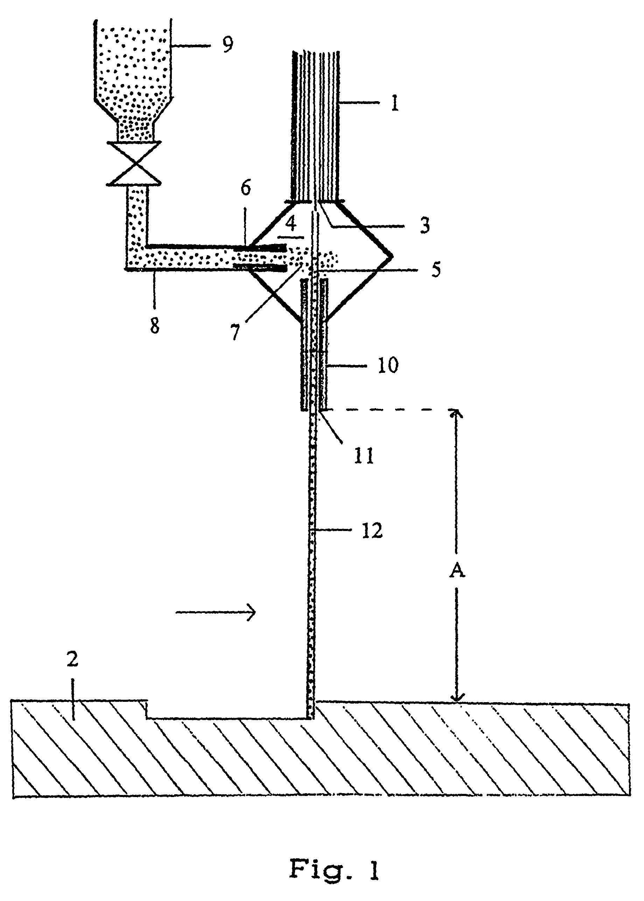

**Figur 1** zeigt denjenigen Teil einer Hochdruck- Wasserstrahlbearbeitungsvorrichtung, der dem zu bearbeitenden Werkstück zugewandt ist. Die Vorrichtung umfaßt einer Zuleitung 1aus Stahl, die nach unten, in Richtung auf ein Werkstück 2 aus Quarzglas durch eine Wasserdüse 3 abgeschlossen ist. Über die Wasserdüse 3 strömt ein kompimierter Wasserstrahl 5 aus der Zuleitung 1 in die Mischkammer 4 ein. Außerdem wird der Mischkammer 4 durch einen seitlichen Zulauf 6 ein Abrasivmittel 7 in Form von feinteiligem Granat oder Siliciumcarbid zugeführt. Der Zulauf 6 ist über einen flexiblen Schlauch 8 mit einem Vorratsbehälter 9 für das Abraslvmittel 7 verbunden. Das in die Mischkammer 4 eingeleitete Abrasivmittel 7 wird vom Wasserstrahl 5 mitgerissen und einem Fokussierrohr 10 zugeführt, das am unteren Ende der Mischkammer 4 angesetzt ist. In dem der Mischkammer 4 abgewandten Ende des Fokussierrohres 10 tritt aus einer Fokusdüse 11 der mit Abrasivmittel 7 beladene Wasserstrahl 12 mit hoher Geschwindigkeit aus und trifft dabei auf die Oberfläche des Werkstückes 2. Das Werkstück 2 wird mittels einem (in der Figur nicht dargestellten) Werkstückhalter gehalten. Das Fokussierrohr 10 mitsamt der Mischkammer 4 ist in Richtung des Wasserstrahls 12, und mittels einer xy-Vorschubeinheit in den Richtungen senkrecht dazu verschiebbar, wie dies mit dem Richtungspfeil angedeutet ist. Die xy-Vorschubeinheit ist mit einer computergesteuerten Steuereinheit verbunden. Der Arbeitsabstand zwischen der Fokusdüse 11 und der Oberfläche des zu bearbeitenden Werkstückes 2 ist in Figur 1 mit "A" bezeichnet.

Anhand der Darstellung in Figur 1 werden nachfolgend Ausführunsgbeispieles für das erfindungsgemäße Verfahren näher erläutert:

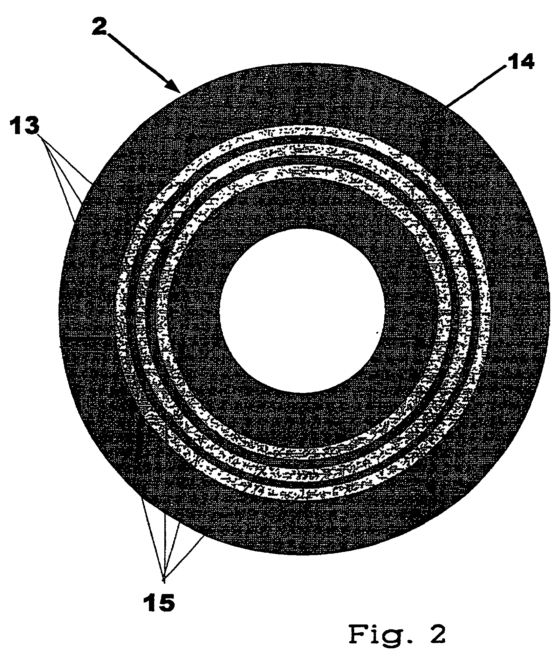

### Ausführungsbeispiel 1 (Figur 2)

In ein ringscheibenförmiges Werkstück 2 aus Quarzglas sollen vier, in einem Abstand von 1.5 mm koaxial zueinander verlaufende, 10 mm tiefe und 2.4 mm breite Ringnuten 13 eingefräst werden. Die Seitenwände der Ringnuten 13 sollen sich im wesentlichen senkrecht zur flachen Oberseite 14 des Werstückes 2 erstrecken und die Kanten sollen scharf ausgebildet sein.

Hierzu wird der Arbeitsdruck innerhalb der Zuleitung1 auf einen Wert von 100 MPa eingestellt. Die Wasserdüse 3 weist einen Innendurchmesser von 0.3 mm auf. Dem Wasserstrahl 5 werden innerhalb der Mischkammer 4 feinteilige und scharfkantige SiC-Teilchen 7 mit einer mittleren Korngröße von 135 µm, einer Dichte von 3,2 g/cm³ und einer Härte von 2700 Hv zugemischt. Der Massenstrom der der Mischkammer zugeführten SiC-Teilchen wird auf 30 cm³/min, also etwa 100 g/min eingestellt. Die Länge des Fokussierrohres 10 beträgt 35 mm, der Durchmesser der Fokusdüse 11 entspricht mit 1.2 mm der halben Breite der zu fräsenden Nut.

Der Arbeitsabstand A wird konstant auf einem Wert von 5 mm gehalten. Die Durchmesser der zu fräsenden Ringnuten 13 werden in die Steuereinheit eingegeben, so daß mittels der xy-Vorschubeinheit das Fokussierrohr 10 in entsprechenden kreisförmigen Bewegungen über der Werkstück-Oberseite 14 bewegt wird. Das Fokussierrohr 10 bewegt sich über die Breite der zu fräsenden Ringnut 13 radial von innen nach außen und wieder zurück, wobei nach jeder vollen Umdrehung des Werkstückes 14 das Fokussierrohr 10 um eine Strecke von 1.2 mm radial versetzt wird. Es sind somit zwei parallele und aneinandergrenzende Frässchnitte zur Erzeugung jeder Ringnut 13 erforderlich.

Die entsprechende Bearbeitung des Quarzglaswerkstückes 2 unter Einstelllung der genannten Parameter bei der in Figur 1 dargestellten Hochdruck- Wasserstrahlbearbeitungsvorrichtung ist Innerhalb weniger Minuten beendet. Die dabei gefrästen Ringnuten 13 sind scharfkantig und zeichnen sich durch vertikale Seitenwände aus. Die schmalen 1.5 mm breiten Stege 15 zwischen benachbarten Ringnuten sind gleichmäßig und unbeschädigt; es wurden weder Abplatzungen noch Risse im Quarzglas-Werkstück 2 festgestellt.

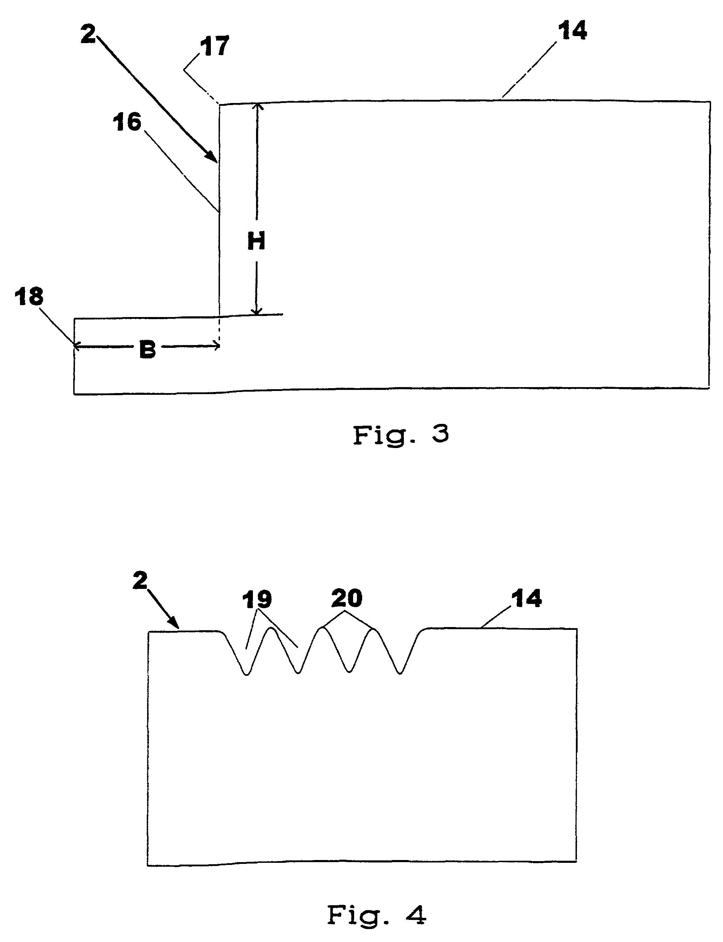

### Ausführungsbeispiel 2 (Figur 3)

An einem scheibenförmigen Werkstück 2 aus Quarzglas mit einem Außendurchmesser von 200 mm soll eine ringförmige, außen umlaufende Stufe 16 mit einer Breite "B" von 30 mm und einer Höhe "H" von 100 mm durch Fräsen erzeugt werden. Die Stufenkante 17 soll scharf ausgebildet sein.

Hierzu wird der Arbeitsdruck innerhalb der Zuleitung 1 auf einen Wert von 50 MPa eingestellt. Die Wasserdüse 3 weist einen Innendurchmesser von 0.2 mm auf. Dem Wasserstrahl 5 werden innerhalb der Mischkammer 4 feinteilige Granat-Teilchen 7 mit einer mittleren Komgröße entsprechend 100 mesh (entspricht einem mittleren Durchmesser von etwa 150 µm) zugemischt. Der Massenstrom der der Mischkammer zugeführten Granat-Teilchen wird auf etwa 130 g/min eingestellt. Das Fokussierrohr 10 ist 35 mm lang, der Durchmesser der Fokusdüse 11 beträgt 1.2 mm.

Der Arbeitsabstand A wird konstant auf einem Wert von 3 mm gehalten. In die Steuereinheit werden die oben genannten geometrischen Abmessungen der zu fräsenden Stufe eingegeben, so daß mittels der xy-Vorschubeinheit das Fokussierrohr 10 von der Mantelfläche 18 des Werkstückes 2 beginnend in kreisförmigen, nach innen enger werdenden Bewegungen über die Oberseite 14 des Werkstückes 2 bewegt wird. Die Vorschubgeschwindigkeit wird dabei auf 500 mm/min eingestellt.

Die entsprechende Bearbeitung des Quarzglas-Werkstückes 2 unter Einstelllung der genannten Parameter bei der in Figur 1 dargestellten Hochdruck- Wasserstrahlbearbeitungsvorrichtung ist innerhalb etwa 1 Stunde beendet. Die dabei erzeugte Stufe 16 ist scharfkantig. Die Zeitersparnis gegenüber einer Bearbeitung mittels traditionellem Schleifverfahren beträgt ca. 1.5 Stunden. Es wurden weder Abplatzungen noch Risse im Werkstück 2 festgestellt.

### Ausführungsbeispiel 3 (Figur 4)

In ein plattenförmiges Werkstück 2 aus Quarzglas sollen vier, in einem Abstand von 5 mm parallel zueinander verlaufende, 15 mm tiefe und 5 mm breite V-Nuten 19 eingefräst werden. Die oberen Begrenzungslinien 20 der V-Nuten 19 sollen abgerundet und diffus ausgebildet sein.

Hierzu wird der Arbeitsdruck innerhalb der Zuleitung 1 auf einen Wert von 20 MPa eingestellt. Die Wasserdüse 3 weist einen Innendurchmesser von 0.4 mm auf. Dem Wasserstrahl 5 werden innerhalb der Mischkammer 4 feinteilige und scharfkantige SiC-Teilchen 7 mit einer mittleren Korngröße von 135 µm, einer Dichte von 3,2 g/cm³ und einer Härte von 2700 Hv zugemischt. Der Massenstrom der der Mischkammer zugeführten SiC-Teilchen wird auf 40 cm³/min, also etwa 130 g/min eingestellt. Die Länge des Fokussierrohres 10 beträgt 35 mm, der Durchmesser der Fokusdüse 11 beträgt 2.0 mm.

Der Arbeitsabstand A wird konstant auf einem Wert von 20 mm gehalten. Länge und Abstand der zu fräsenden V-Nuten 19 werden in die Steuereinheit eingegeben, so daß mittels der xy-Vorschubeinheit das Fokussierrohr 10 in parallelen Längsbewegungen über der Werkstück-Oberseite 14 bewegt wird. Die Vorschubgeschwindigkeit wird dabei auf 6000 mm/min eingestellt.

Die entsprechende Bearbeitung des Quarzglas-Werkstückes 2 unter Einstellung der genannten Parameter bei der in Figur 1 dargestellten Hochdruck- Wasserstrahlbearbeitungsvorrichtung ist innerhalb weniger Minuten beendet. Aufgrund des großen Arbeitsabstandes und der damit einhergehenden Verbreiterung des Wasserstrahls werden V-Nuten 19 mit diffusen, abgerundeten Rändern 20 erhalten. Die V-Nuten 19 sind gleichmäßig tief; es wurden weder Abplatzungen noch Risse im Quarzglaswerkstück festgestellt.

Die oben beschriebenen Ausführungsbeispiele dienen zur Erläuterung prinzipieller Arbeitsweisen bei der Bearbeitung von Quarzglas-Bauteilen mittels Abrasiv-Wasserstrahl. Sie geben Anhaltspunkte für konkrete Bearbeitungsaufgaben, beispielsweise ein Herausfräsen eines umlaufenden Flansches einer Quarzglasglocke oder ein Einfräsen von V-Nuten zum Einlegen von Dichtringen.

## Patentansprüche

1. Verfahren zum sukzessiven, großflächigen Abtragen von Oberflächenschichten eines Bauteils aus Quarzglas mittels eines Abrasivmittel enthaltenden Flüssigkeitsstrahls, der unter hohem Arbeitsdruck aus einer Düse austretend auf die Oberfläche des Bauteils auftrifft, wobei die Düse mit vorgegebener Vorschubgeschwindigkeit relativ zur Bauteiloberfläche und senkrecht zur Richtung des Flüssigkeitsstrahls bewegt wird, **dadurch gekennzeichnet, daß** zum Abtragen der Oberflächenschichten der Arbeitsdruck auf einen Wert im Bereich von 20 MPa bis maximal 150 MPa eingestellt wird und mehrere, aneinander angrenzende Schnittlinien mit einer Breite größer als der Durchmesser des Flüssigkeitsstrahls ausgeführt werden.

2. Verfahren nach Anspruch 1, **dadurch gekennzeichnet, daß** der Arbeitsdruck auf einen Wert im Bereich von 20 MPa bis maximal 120 MPa eingestellt wird.

3. Verfahren nach Anspruch 1, **dadurch gekennzeichnet, daß** das Abrasivmittel dem Flüssigkeitsstrahl vor dem Auftreffen auf die Bauteil-Oberfläche zugeführt wird, mit der Maßgabe, daß die Zuführrate von Abrasivmittel zum Flüssigkeitsstrahl maximal 400 g/min beträgt.

4. Verfahren nach Anspruch 3, **dadurch gekennzeichnet, daß** die Zuführrate des Abrasivmittels maximal 100 g/min beträgt.

5. Verfahren nach Anspruch 1, **dadurch gekennzeichnet, daß** die Vorschubgeschwindigkeit auf einen Wert im Bereich von 500 mm/min bis 15000 mm/min eingestellt wird.

6. Verfahren nach Anspruch 1, **dadurch gekennzeichnet, daß** zur Erzeugung diffuser Kanten im Bereich der Abtragung, der Abstand der Düse von der Bauteil-Oberfläche auf einen Wert im Bereich von 20 mm bis 50 mm eingestellt wird.

7. Verfahren nach Anspruch 6, **dadurch gekennzeichnet, daß** zur Erzeugung scharfer Kanten im Bereich der Abtragung, der Abstand der Düse von der Bauteil-Oberfläche auf einen Wert im Bereich von 2 mm und 5 mm eingestellt wird.

## Claims

1. A method for successive large-area slicing of surface layers of a quartz glass member by means of a liquid jet stream containing an abrasive agent that impinges on the surface of the member after leaving a nozzle under high working pressure while moving the nozzle at a pre-determined traverse speed relative to the surface of the member and perpendicularly to the direction of the liquid jet stream, wherein for slicing the surface layers the working pressure is adjusted to a value in the range of 20 MPa to 150 MPa or less and several cutting lines are performed adjacent to each other having a line width larger than the diameter of the liquid jet stream.

2. A method as claimed in claim 1, wherein the working pressure is adjusted to a value in the range of 20 MPa to 120 MPa or less.

3. A method as claimed in claim 1, wherein the abrasive agent is added to the liquid jet stream before impinging on the surface of the member with the proviso that the feeding rate of the abrasive agent to the liquid jet stream is 400 g/min or less.

4. A method as claimed in claim 3, wherein the feeding rate of the abrasive agent is 100 g/min or less.

5. A method as claimed in claim 1, wherein the traverse speed is adjusted to a value in the range of 500 mm/min to 15000 mm/min.

6. A method as claimed in claim 1, wherein for producing diffuse edges in the slicing area the distance between the nozzle and the surface of the member is adjusted to a value in the range of 20 mm to 50 mm.

7. A method as claimed in claim 6, wherein for producing sharp edges in the slicing area the distance between the nozzle and the surface of the member is adjusted to a value in the range of 2 mm to 5 mm.

## Revendications

1. Procédé d'abrasion successive étendue de couches de surface d'un composant en verre de quartz au moyen d'un jet de liquide contenant un abrasif, qui fait impact sur la surface du composant en sortant d'une buse sous pression de travail élevée, la buse étant déplacée avec une vitesse d'avance prédéterminée de manière relative par rapport à la surface du composant et perpendiculairement à la direction du jet de liquide, **caractérisé en ce que** pour l'abrasion des couches de surface, la pression de travail est amenée à une valeur comprise entre 20 MPa et maximal 150 Mpa et plusieurs lignes de coupe attenantes entre elles sont réalisées avec une largeur supérieure au diamètre du jet de liquide.

2. Procédé selon la revendication 1, **caractérisé en ce que** la pression de travail est réglée à une valeur comprise entre 20 MPa et maximum 120 MPa.

3. Procédé selon la revendication 1, **caractérisé en ce que** l'abrasif est amené au jet de liquide avant l'impact sur la surface de composant avec la référence que le débit d'alimentation d'abrasif au jet de liquide est de maximum 400 g/min.

4. Procédé selon la revendication 3, **caractérisé en ce que** le débit d'alimentation de l'abrasif est de maximal 100 g/min.

5. Procédé selon la revendication 1, **caractérisé en ce que** la vitesse d'avance est réglée à une valeur comprise entre 500 mm/min et 15000 mm/min.

6. Procédé selon la revendication 1, **caractérisé en ce que** pour la génération d'arêtes diffuses dans la zone de l'abrasion, la distance entre la buse et la surface de composant est réglée à une valeur comprise entre 20 mm et 50 mm.

7. Procédé selon la revendication 6, **caractérisé en ce que** pour la génération d'arêtes diffuses dans la zone de l'abrasion, la distance entre la buse et la surface de composant est réglée à une valeur comprise entre 2 mm et 5 mm.
